# EUROPEAN PATENT APPLICATION

(11) **EP 4 484 635 A1**
(43) Date of publication of application: **01.01.2025**
(21) Application number: 23775202.7
(22) Date of filing: 09.03.2023
(51) Int. Cl.: D06F 43/00, D06F 43/08

(54) **LAUNDRY PROCESSING DEVICE AND CONTROL METHOD THEREOF**

(30) Priority: 24.03.2022 KR 20220036783; 09.06.2022 KR 20220070291
(71) Applicant: LG Electronics Inc., Yeongdeungpo-gu Seoul 07336 (KR)
(72) Inventor: LEE, Joo Seong, Seoul 08592 (KR); KIM, Yang Gyu, Seoul 08592 (KR); CHOI, Byung Ha, Seoul 08592 (KR); LEE, Jang Seok, Seoul 08592 (KR)
(74) Representative: Vossius & Partner Patentanwälte Rechtsanwälte mbB
(86) International application number: PCT/KR2023/003234
(87) International publication number: WO 2023/182704

(57) **Abstract**

Provided are a laundry processing device and a control method thereof, the laundry processing device including a washing tub that includes a drum, a distillation tank that stores liquid carbon dioxide discharged from the washing tub and gaseous carbon dioxide, a storage tank that stores liquid carbon dioxide to which gaseous carbon dioxide of the distillation tank is cooled and gaseous carbon dioxide evaporated from the cooled liquid carbon dioxide, a compressor that sucks and discharges at least one of the gaseous carbon dioxide of the distillation tank and the gaseous carbon dioxide of the storage tank, a cooler that cools gaseous carbon dioxide discharged from the compressor, and a controller that monitors pressures inside the distillation tank and the storage tank.

## Description

### Technical Field

The present disclosure relates to a laundry processing device and a control method thereof, and more specifically, relates to a laundry processing device of managing internal pressure safely and a control method thereof.

### Background Art

In general, laundry processing devices use water as washing media and wash laundry using a water flow of washing generated by rotating a pulsator or wash laundry using the falling impact force of laundry according to the rotation of a drum. These laundry processing devices have problems in that water is excessively used in a washing process, much energy is consumed to drive devices, and various chemicals such as a detergent, a fabric softener, and a bleaching agent are used in addition to water for washing laundry.

In order to resolve the problems described above, measures to wash laundry using other washing media substituted for water have recently been researched. Representatively, carbon dioxide, water vapors, gases, ultraviolet rays, and the like may be used as washing media substitutable for water in a laundry processing device. In particular, carbon dioxide is nontoxic, noncombustible, and eco-friendly and may be used for low cost, thereby having many advantages as a washing medium.

With regard to a washing machine using carbon dioxide, related art 1 (Korean Patent No. 10-0622260) discloses a laundry treating apparatus having a structure using a 3-tank including i) a storage tank 300 storing liquid carbon dioxide, ii) a washing machine agitator 400 performing washings, and iii) a vaporizing separator 500 for recycling waste carbon dioxide after washings.

In addition, related art 2 (Japanese Patent No. 4394293) discloses a laundry treating apparatus having a structure using a 3-tank including i) a supply tank 18 for supplying liquid carbon dioxide, ii) a treatment vessel 10 cleaning clothes, and iii) an evaporation vessel 36 for recirculating used carbon dioxide.

However, related arts 1 and 2 described above have used a manner of reducing the internal pressure of a distillation tank using a manner that, when the internal pressure of the distillation tank rises up to a preset pressure, a compressor sucks gaseous carbon dioxide inside the distillation tank and then discharges and liquid carbon dioxide cooled in a cooler is discharged and supplied to a storage tank.

These related arts have been required to use a compressor using a high torque motor for operation notwithstanding an internal pressure difference between a storage tank and a distillation tank, which have a problem of being unsafe since pressure rapidly rises when troubles such as valve breakdown or pipe clogging on flow paths occur. Further, these related arts have had a problem that the internal pressure of the storage tank rises exceeding a safety range as the mass of carbon dioxide inside the distillation tank decreases and the mass of carbon dioxide inside the storage tank increases in a process where gaseous carbon dioxide inside the distillation tank flows into the storage tank through the compressor and the cooler.

In addition, related art 3 (Korean laid-open patent publication No. 1999-0040499) discloses a contaminant decontamination apparatus including i) a supplied carbon dioxide storage tank 80 for supplying carbon dioxide, ii) a discharged carbon dioxide storage tank 110 for temporarily storing carbon dioxide and particulate pollution sources discharged from a reactor, and iii) a separator 120 for separating carbon dioxide and particulate pollution sources from materials discharged from the discharged carbon dioxide storage tank.

However, related art 3 of removing contaminants using carbon dioxide above separates carbon dioxide and impurities through pressurization on carbon dioxide used for contaminant removal and impurities, thereby having a problem that internal pressure management for the safety of a laundry processing device is weak.

### Detailed Description of the Invention

### Technical Goals

Example embodiments of the present disclosure are to provide a laundry processing device and a control method thereof for effectively managing the pressure of each tank in order for pressure inside a storage tank not to exceed a safety range in a process where gaseous carbon dioxide inside a distillation tank flows into the storage tank.

Specifically, example embodiments of the present disclosure are to provide a technology for managing the pressure of each tank safely by controlling a valve between the storage tank and the distillation tank in an open state and controlling pressures inside the storage tank and the distillation tank simultaneously to decrease.

More specifically, example embodiments of the present disclosure are to provide a technology for operating within a safety range even though the internal pressure of the storage tank increases and the internal pressure of the distillation tank decreases according to other operation modes later as pressures inside the storage tank and the distillation tank simultaneously decrease up to the safety range.

Example embodiments of the present disclosure are to reduce a pressure difference between two tanks according to controlling a valve between the storage tank and the distillation tank in an open state and to provide a technology for using a compressor using a relatively low torque motor since not operating despite a pressure difference between the storage tank and the distillation tank as in existing arts. Therefore, even if troubles such as valve breakdown or pipe clogging on flow paths occur, the risk of a rapid rise in pressure is relatively less.

Example embodiments of the present disclosure are to provide a laundry processing device and a control method thereof for performing depressurization of a storage tank using a single compressor.

Specifically, by performing a cooling depressurization operation for depressurization inside the storage tank during a laundry processing operation to manage the internal pressure of the laundry processing device, the stability of the laundry processing device may be improved.

More specifically, example embodiments of the present disclosure are to provide a technology for managing the internal pressure of the laundry processing device by performing a simultaneous regeneration operation of a storage tank and a washing tub for a predetermined initial period of time during washing tub recovery.

The present disclosure is not limited to the technical features described above, and other technical features may be inferred from the example embodiments below.

### Technical solutions

According to an aspect of the present disclosure for managing internal pressure safely, there is provided a laundry processing device including a washing tub that includes a drum, a distillation tank that stores liquid carbon dioxide discharged from the washing tub and gaseous carbon dioxide, a storage tank that stores liquid carbon dioxide to which gaseous carbon dioxide of the distillation tank is cooled and gaseous carbon dioxide evaporated from the cooled liquid carbon dioxide, a compressor that sucks and discharges at least one of the gaseous carbon dioxide of the distillation tank and the gaseous carbon dioxide of the storage tank, a cooler that cools gaseous carbon dioxide discharged from the compressor, and a controller that monitors pressures inside the distillation tank and the storage tank.

In this case, the controller may be configured, when the pressure of the distillation tank reaches a preset first pressure, to control a first valve between the distillation tank and the storage tank in an open state.

In addition, the controller may be configured, when a difference between the pressure of the distillation tank and the pressure of the storage tank is within a reference value, to control operation of the laundry processing device in a first operation mode.

Meanwhile, the first operation mode may be, until the pressure of the storage tank reaches a preset second pressure, a mode to control operation of the laundry processing device in order for liquid carbon dioxide cooled in the cooler to be discharged into the storage tank after the compressor sucks the gaseous carbon dioxide of the distillation tank and the gaseous carbon dioxide of the storage tank simultaneously and discharges.

In addition, the controller may be configured, when the pressure of the storage tank reaches the preset second pressure, to control a second valve between the storage tank and the compressor in a closed state.

Further, when a mode of the laundry processing device corresponds to the first operation mode, the compressor may suck and discharge gaseous carbon dioxide of the storage tank and the distillation tank.

Meanwhile, the controller may be configured, after the first operation mode, to control operation of the laundry processing device in a second operation mode in which the compressor sucks and discharges the gaseous carbon dioxide of the distillation tank, and the second operation mode may be, when the pressure of the storage tank reaches a preset third pressure, a mode to control operation of the laundry processing device in the first operation mode, and after the pressure of the distillation tank reaches a preset fourth pressure in a state where the pressure of the storage tank is not reached by the preset third pressure, a mode in which operation of the compressor is ended.

In this case, when a mode of the laundry processing device corresponds to the second operation mode, the compressor may suck gaseous carbon dioxide from the distillation tank alone and discharge.

Meanwhile, the controller may be configured, according to a third operation mode, to control the compressor to suck and discharge gaseous carbon dioxide inside the storage tank during a rotating operation of the drum corresponding to a washing mode or a rinsing mode.

In this case, the controller may be configured to, according to the third operation mode, control a second valve between the storage tank and the compressor in an open state in order to supply gaseous carbon dioxide inside the storage tank to the compressor, control the compressor and the cooler so that the compressor and the cooler operate, and when the pressure inside the storage tank reaches a preset fifth pressure, control the second valve in a closed state.

In addition, the controller may be configured, according to a fourth operation mode, to control the compressor to suck gaseous carbon dioxide inside the storage tank and gaseous carbon dioxide inside the washing tub simultaneously and discharge, after the rotating operation of the drum is completed.

In this case, the controller may be configured to, according to the fourth operation mode, control a second valve between the storage tank and the compressor in an open state in order to supply gaseous carbon dioxide inside the storage tank to the compressor, control a third valve between the washing tub and the compressor in an open state in order to supply gaseous carbon dioxide inside the washing tub to the compressor, control the compressor and the cooler so that the compressor and the cooler operate, and when the pressure inside the storage tank reaches a preset sixth pressure, control the second valve in a closed state.

In addition, the controller may be configured, when pressure inside the washing tub reaches a preset seventh pressure, to control the cooler so that operation of the cooler is stopped.

Further, the controller may be configured, when the pressure inside the washing tub reaches a preset eighth pressure, to control the third valve in a closed state.

According to another aspect of the present disclosure for managing the internal pressure of a laundry processing device safely, there is provided a control method of a laundry processing device, the control method including monitoring pressures of a distillation tank and a storage tank, when the pressure of the distillation tank reaches a preset first pressure, controlling a valve between the storage tank and the distillation tank in an open state, controlling the pressure of the storage tank and the pressure of the distillation tank to decrease according to a first operation mode so that the pressure of the storage tank becomes less than a preset second pressure, and when the pressure of the storage tank is less than the preset second pressure, controlling the pressure of the storage tank to increase and the pressure of the distillation tank to decrease according to a second operation mode.

According to another aspect of the present disclosure for managing the internal pressure of a laundry processing device safely, there is provided a control method of a laundry processing device, the control method including controlling a rotating operation of a drum included in a washing tub, opening a valve positioned on a pipe connecting a storage tank and a compressor according to a preset operation mode, controlling the compressor to suck and discharge gaseous carbon dioxide inside the storage tank during the rotating operation of the drum according to a preset operation mode, and controlling a cooler to cool gaseous carbon dioxide discharged from the compressor and to discharge liquid carbon dioxide according to the preset operation mode.

Details of other example embodiments are included in the detailed description and drawings.

### Effects of the Invention

According to the example embodiments of the present disclosure, there may be one or more of the effects as below.

According to the example embodiments of the present disclosure, a laundry processing device may use a compressor that has a relatively low-performance motor, thereby having an advantage in terms of cost and space for installation. In this case, by controlling a valve between a storage tank and a distillation tank in an open state to control a pressure difference between tanks within a reference value, it is possible to have carbon dioxide flowing although using the relatively low-performance motor.

In addition, the laundry processing device according to the example embodiments of the present disclosure may have an advantage of managing pressures of tanks within a safety range through an operation mode for reducing pressures inside the storage tank and the distillation tank simultaneously. Specifically, there is an advantage of managing the internal pressure of each tank safely through a process of reducing pressures inside the storage tank and the distillation tank simultaneously even though the internal pressure of the storage tank increases and the internal pressure of the distillation tank decreases in other operation modes.

According to the example embodiments of the present disclosure, a laundry processing device may use a single compressor for depressurizing a storage tank, thereby reducing the cost of implementing the laundry processing device and simplifying a system layout of the laundry processing device.

Further, the laundry processing device according to the example embodiments of the present disclosure may perform an operation for depressurization in parallel during a laundry processing operation to manage internal pressure within a safety range, thereby preventing a delay in laundry processing time since a separate time is not required for safety management.

The effects to be obtained in the present disclosure are not limited to the aforementioned effects, and other effects not mentioned herein will be clearly understood by those skilled in the art from the attached claims.

### Brief Description of Drawings

FIG. 1 is a diagram illustrating a laundry processing device of a structure using a 3-tank according to a first example embodiment of the present disclosure.
FIG. 2 is a diagram for explaining an operation process in a laundry processing device of a structure using a 3-tank according to the first example embodiment of the present disclosure.
FIG. 3 is a flowchart for explaining a process in which a laundry processing device operates selectively according to a first operation mode and a second operation mode according to the first example embodiment of the present disclosure.
FIG. 4 is a diagram for explaining a first operation mode of a laundry processing device according to the first example embodiment of the present disclosure.
FIG. 5A shows changes in pressures inside a storage tank and a distillation tank in a laundry processing device according to the first example embodiment of the present disclosure, and FIG. 5B is a diagram showing changes in pressures inside a storage tank and a distillation tank according to an example embodiment other than FIG. 5A.
FIG. 6 is a diagram for explaining a control method of a laundry processing device according to the first example embodiment of the present disclosure.
FIG. 7 is a diagram for showing a laundry processing device of a 3-tank structure including a single compressor according to a second example embodiment of the present disclosure.
FIG. 8 is a diagram for showing operations in a third operation mode of a laundry processing device according to the second example embodiment of the present disclosure.
FIG. 9 is a flowchart for explaining a control method of a laundry processing device according to a third operation mode according to the second example embodiment of the present disclosure.
FIG. 10 is a diagram for showing operations in a fourth operation mode of a laundry processing device according to the second example embodiment of the present disclosure.
FIG. 11 is a flowchart for explaining a control method of a laundry processing device according to a fourth operation mode according to the second example embodiment of the present disclosure.
FIG. 12 is a block diagram for explaining operations of a laundry processing device performing internal depressurization according to the second example embodiment of the present disclosure.

### Mode for Carrying Out the Invention

Hereinafter, example embodiments of the present disclosure will be clearly described in detail so that those of ordinary skill in the art to which the present disclosure pertains may easily implement them.

Terms used in the present specification are to explain example embodiments, but not to limit the present disclosure. Unless otherwise defined, all terms (including technical and scientific terms) used in the present specification may be used with meanings understood in common by those of ordinary skill in the art to which the present disclosure pertains, but the terms may vary depending on the intention of one of ordinary skilled in the art, legal precedents, emergence of new technologies, and the like.

Further, terms defined in generally used dictionaries are not construed ideally or exaggeratedly unless clearly otherwise defined. In certain cases, there may be terms arbitrarily selected by the applicant, and in this case, the meaning of the term will be described in detail in the corresponding description. Therefore, the terms used in the present disclosure are not to be construed simply as its designation but based on the meaning of the term and the overall context of the present disclosure.

Throughout the specification, when a part is described as "comprising or including" a component, it does not exclude another component but may further include another component unless otherwise stated. Further, the singular used in the present specification includes the plural unless mentioned otherwise. Furthermore, expression "at least one of a, b, and c" described throughout the specification may include "a alone," "b alone," "c alone," "a and b," "a and c," "b and c," or "all of a, b, and c."

Meanwhile, terms used in the specification such as "first" and/or "second" may be used to explain various elements, but the terms are used to distinguish one element from another element, not to be limited to the element referred to as the corresponding term. For example, unless departing from the scope of the present disclosure, the first element may be designated as the second element, and the second element may also be designated as the first element.

In addition, terms such as "... unit," "... group," and "... module" described in the specification mean a unit that processes at least one function or operation, which may be implemented as hardware, software, or a combination thereof. Further, the example embodiments of the present disclosure may be represented by functional block elements and various processing steps. The functional blocks may be implemented in any number of hardware and/or software configurations that perform specific functions.

Hereinafter, various example embodiments of the present disclosure will be described in detail with reference to the accompanying drawings. In describing the example embodiments, descriptions of technical contents that are well known in the technical field to which the present disclosure pertains and that are not directly related to the present disclosure will be omitted. This is to more clearly convey the gist of the present disclosure without obscuring the gist of the present disclosure by omitting unnecessary description. For the same reason, some elements are exaggerated, omitted, or schematically illustrated in the accompanying drawings. In addition, the size of each element does not fully reflect the actual size. Throughout the present specification, the same reference numerals may refer to the same or corresponding elements.

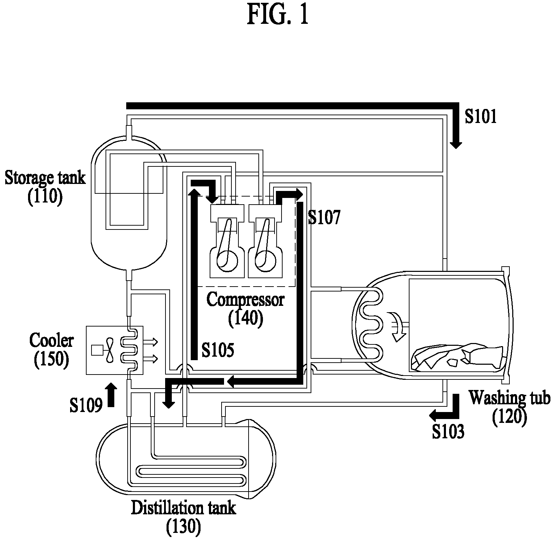

FIG. 1 is a diagram illustrating a laundry processing device of a structure using a 3-tank according to a first example embodiment of the present disclosure. Referring to FIG. 1, the laundry processing device may include a storage tank 110, a washing tub 120, a distillation tank 130, a compressor 140, and a cooler 150. The laundry processing device according to an example embodiment of the present disclosure may have a 3-tank structure including the storage tank 110, the washing tub 120, and the distillation tank 130.

The laundry processing device illustrated in FIG. 1 may be a drum-type laundry processing device into which laundry is inserted from a front direction or a laundry processing device into which laundry is inserted from a top direction. The laundry processing device illustrated in FIG. 1 may perform at least one laundry processing operation of washing, rinsing, dehydrating, and drying to remove contaminants of laundry for the inserted laundry and may perform an operation for processing laundry by circulating carbon dioxide instead of using water.

The storage tank 110 may store carbon dioxide for performing a laundry processing operation, and carbon dioxide stored in the storage tank 110 may be in a liquid state or a gaseous state. The storage tank 110 may supply carbon dioxide to the washing tub 120 in order to perform a laundry processing operation, and carbon dioxide used for the laundry processing operation may be recovered to the storage tank 110 through the distillation tank 130, the compressor 140, and the cooler 150. In an example embodiment, the storage tank 110 may store liquid carbon dioxide corresponding to A+B including an amount A of liquid carbon dioxide required for washing and an amount B of liquid carbon dioxide required for rinsing. Meanwhile, though not illustrated, the storage tank 110 may include a pressure sensor for monitoring pressure inside the storage tank 110.

In an example embodiment, in performing a washing operation of one time, a recovery rate of carbon dioxide discharged from the storage tank 110 is about 98 %, and carbon dioxide that is not recovered may be supplemented from outside. Specifically, when a level of carbon dioxide is sensed in the storage tank 110 and the level is less than a predetermined reference or when the number of times of laundry processing operations reaches a preset number of times, the storage tank 110 may have carbon dioxide supplied from outside.

The washing tub 120 may perform a laundry processing operation for the inserted laundry using carbon dioxide. The washing tub 120 may have carbon dioxide supplied from the storage tank 110 depending on whether a valve installed in a connection pipe between the storage tank 110 and the washing tub 120 is open or closed. Specifically, when the valve installed in the connection pipe between the storage tank 110 and the washing tub 120 is on, liquid carbon dioxide stored in the storage tank 110 may be supplied to the washing tub 120 by gravity. Meanwhile, when the valve installed in the connection pipe between the storage tank 110 and the washing tub 120 is off, liquid carbon dioxide stored in the storage tank 110 may not be supplied inside the washing tub 120 even by gravity.

In addition, though not illustrated, the washing tub 120 may further include a sensor for measuring an amount of liquid carbon dioxide inside the washing tub 120, and when it is identified that liquid carbon dioxide greater than or equal to a reference value is introduced to the washing tub 120, supplying liquid carbon dioxide may be stopped by turning off a valve between the storage tank 110 and the washing tub 120 by a control module (not shown). Specifically, a reference value for measuring an amount of liquid carbon dioxide may be determined based on an amount of laundry for which washing is processed by a laundry processing device and may be proportional to the amount of laundry. In addition, though not illustrated, the washing tub 120 may further include a pressure sensor for monitoring pressure inside the washing tub 120 and various sensors and devices for measuring a level of liquid carbon dioxide supplied to the washing tub 120.

When a washing operation or a rinsing operation is ended among laundry processing operations, the washing tub 120 may discharge carbon dioxide and impurities into the distillation tank 130 depending on whether a valve installed in a connection pipe between the washing tub 120 and the distillation tank 130 is open or closed. Specifically, when the valve installed in the connection pipe between the washing tub 120 and the distillation tank 130 is on, liquid carbon dioxide used for a laundry processing operation and impurities from the washing tub 120 to the distillation tank 130 by gravity, and the impurities may include sludge generated in the laundry processing operation. When the valve installed in the connection pipe between the washing tub 120 and the distillation tank 130 is off, discharging liquid carbon dioxide and impurities from the washing tub 120 to the distillation tank 130 may be stopped. The valve installed in the connection pipe between the washing tub 120 and the distillation tank 130 may be off by the control module when it is identified that liquid carbon dioxide and impurities are not present within the washing tub 120.

Meanwhile, though not illustrated, the washing tub 120 may include a cabinet that forms an appearance of a laundry processing device, a tub that is positioned inside the cabinet and supported by the cabinet, a drum that is positioned inside the tub and in which laundry is washed, a motor that drives the drum, a supply device that supplies carbon dioxide inside the cabinet, and a drainage device that is formed at a lower side of the tub and discharges carbon dioxide and impurities. In the drum, a plurality of through-holes for supplying liquid carbon dioxide may be formed, and a lifter may be positioned on an inner side so that laundry is lifted at a predetermined height and then dropped by gravity when the drum is rotated.

The cabinet may include a cabinet body, a cabinet cover that is positioned at the front surface of the cabinet body and combined therewith, a control panel that is positioned at an upper side of the cabinet cover and combined with the cabinet body, and a top plate that is positioned at an upper side of the control panel and combined with the cabinet body. The cabinet cover may include a hole through which the laundry may enter and exit and a door that is positioned as rotatable right and left in order for the hole to open and close.

The control panel (not shown) may include operating keys for operating operation states of the laundry processing device and a display that displays the operation states of the laundry processing device. The operating keys and the display included in the control panel are electrically connected to the control module, and the control module may electrically control elements of the laundry processing device. Specifically, the control module may control operations of the laundry processing device based on an operation signal inputted through the operating keys. For example, the motor may be driven by a controller of the laundry processing device, and the drum within the tub may be rotated according to the drive of the motor. The controller may control operations as inputted by an operation signal from the operating keys and, for example, may control a laundry processing operation such as washing, rinsing, dehydrating, and drying. In addition, the controller may control the display to display operation states related to a washing cycle, such as a washing course, a washing time, a dehydrating time, and a rinsing time.

The distillation tank 130 may separate the liquid carbon dioxide and impurities discharged from the washing tub 120 through a distillation operation. The distillation tank 130 may separate carbon dioxide and impurities by vaporizing liquid carbon dioxide using heat energy generated from the compressor 140 and heat energy by a heat source included in the distillation tank 130. In this case, vaporized carbon dioxide may be located at an upper portion of the distillation tank 130, and impurities may be located at a lower portion of the distillation tank 130.

The compressor 140 may suck gaseous carbon dioxide from the distillation tank 130 and discharge the sucked gaseous carbon dioxide. The carbon dioxide discharged from the compressor 140 may be delivered to the cooler 150.

The cooler 150 may condense and liquefy gaseous carbon dioxide discharged by the compressor 140. The cooler 150 may correspond to a condenser, and the condenser is a device included in a heat exchanger and may discharge liquid carbon dioxide by cooling and condensing gaseous carbon dioxide that passes the compressor 140. The liquid carbon dioxide discharged from the cooler 150 may be introduced to the storage tank 110, and the storage tank 110 may recover and store liquid carbon dioxide. In the case of the laundry processing device of the structure illustrated in FIG. 1, a distillation operation may be performed in parallel during a washing cycle.

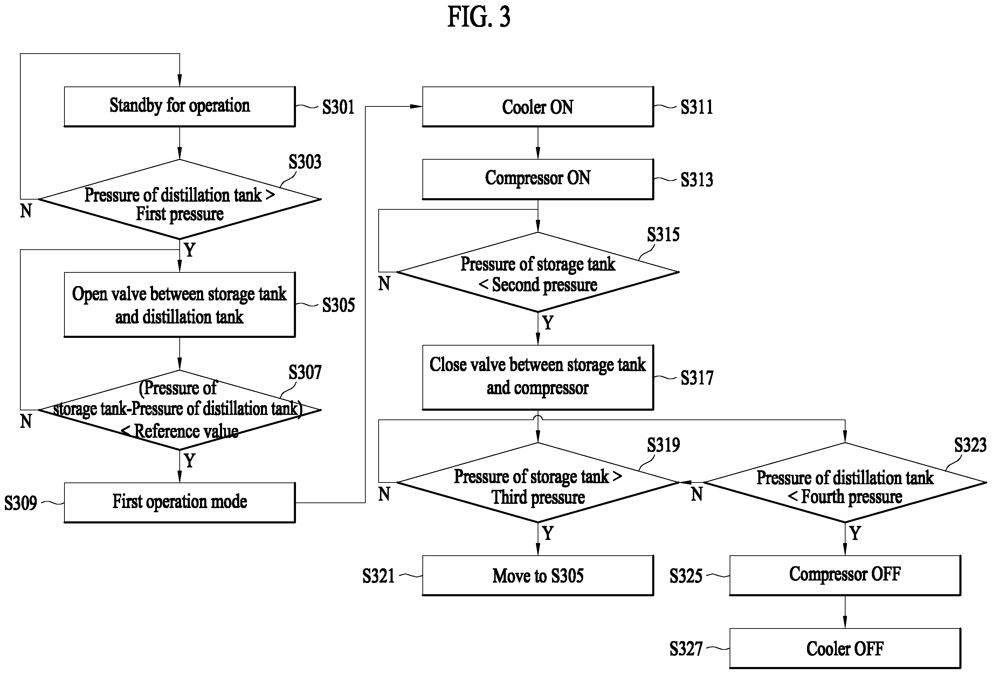

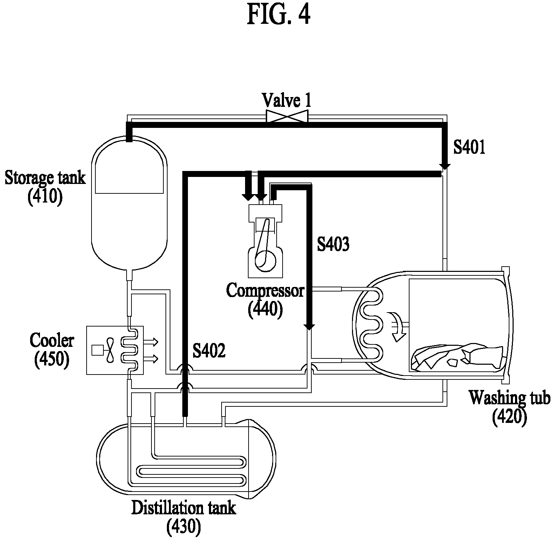

The laundry processing device according to the first example embodiment of the present disclosure may operate in a first operation mode or a second operation mode. Details with regard to the first operation mode are described in detail in FIG. 3 and FIG. 4 below. As for the second operation mode, the compressor 140 may suck gaseous carbon dioxide from the distillation tank 130 and discharge. Specifically, liquid carbon dioxide stored in the storage tank 110 may flow into the washing tub 120 by gravity as in operation S101, and when a washing cycle is completed in the washing tub 120, liquid carbon dioxide may flow into the distillation tank 130 as in operation S103. When the laundry processing device operates in the second operation mode, gaseous carbon dioxide inside the distillation tank 130 may be sucked to the compressor 140 as in operation S105 and may be discharged by the compressor 140 as in operation S107. The discharged gaseous carbon dioxide may pass the distillation tank 130 and flow into the cooler 150 as in operation S109. The liquid carbon dioxide stored in the distillation tank 130 may be vaporized by gaseous carbon dioxide that passes the distillation tank 130 to separate from impurities.

In a laundry processing device 10 for processing laundry using carbon dioxide, in performing a laundry processing operation, the internal pressure of the storage tank 110 may be required to be managed within a safety range. As a specific example, the internal pressure of the storage tank 110 may be allowed at up to a maximum of 58.5 bar. However, in the laundry processing device 10 for processing laundry using carbon dioxide, when a washing tub recovery operation is performed using a single compressor, performance reduction of the laundry processing device 10 may occur due to high differential pressure and a temperature of discharged gas by the compressor 140 may rise beyond a safety range, and thus, a two-stage compression manner may be applied to prevent this.

The two-stage compression manner is performing a compression for gaseous carbon dioxide using two compressors 140 and an intercooler and refers to a manner in which gaseous carbon dioxide is compressed by a first compressor 140, the compressed gaseous carbon dioxide is cooled using the intercooler, and then gaseous carbon dioxide that passes a first intercooler by a second compressor 140 is recompressed. However, when internal pressure management of the laundry processing device 10 is performed by introducing the two-stage compression manner, a laundry processing operation is stopped and an operation of depressurizing the internal pressure of the storage tank 110 is performed when the internal pressure of the storage tank 110 reaches a threshold value of allowed pressure, and thus, a delay to the laundry processing operation may occur due to a time required for a depressurization operation of the storage tank 110.

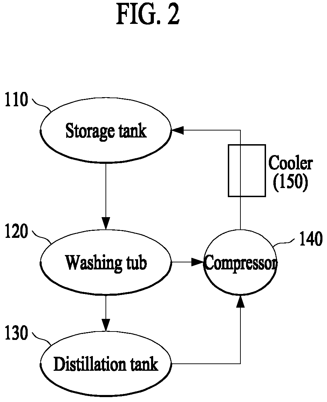

To resolve the above, the laundry processing device according to the first example embodiment of the present disclosure may manage pressures of tanks within a safety range through an operation mode in which pressures inside a storage tank and a distillation tank simultaneously decrease. Specifically, the internal pressure of each tank may be managed safely through a process of reducing pressures inside the storage tank and the distillation tank simultaneously even though the internal pressure of the storage tank increases and the internal pressure of the distillation tank decreases in other operation modes. Specific operations of the laundry processing device according to the first example embodiment of the present disclosure are described in detail through FIGS. 2 to 6 described later.

FIG. 2 is a diagram for explaining an operation process in a laundry processing device of a structure using a 3-tank according to the first example embodiment of the present disclosure. Referring to FIG. 2, liquid carbon dioxide may flow between the storage tank 110, the washing tub 120, and the distillation tank 130 by gravity using a height difference.

The liquid carbon dioxide stored in the storage tank 110 may flow into the washing tub 120 by gravity, and when a washing cycle is ended in the washing tub 120, liquid carbon dioxide and impurities may flow into the distillation tank 130. Liquid carbon dioxide may be evaporated to gaseous carbon dioxide by a second heat in the distillation tank 130, and the compressor 140 may suck the gaseous carbon dioxide that is evaporated and discharge to the cooler 150, and the cooler 150 may cool and condense gaseous carbon dioxide while releasing a first heat to discharge liquid carbon dioxide to the storage tank 110.

In the case of the laundry processing device using the 3-tank with the structure as in FIG. 2, the storage tank 110, the washing tub 120, and the distillation tank 130 may be required to be arranged in a vertical direction for height differences, and since the storage tank 110 and the distillation tank 130 may have an increase in pressures inside the tanks through heat transfer from and to outside, internal pressure management is a requisite for safety.

Inside the storage tank 110 is stored liquid carbon dioxide more than gaseous carbon dioxide, and inside the distillation tank 130 is stored gaseous carbon dioxide more than liquid carbon dioxide. Accordingly, the internal pressure of the storage tank 110 is greater than the internal pressure of the distillation tank 130, and due to the pressure difference as such, a motor of the compressor 140 may require high performance when operating in the second operation mode. Further, when operating in the second operation mode, the mass of carbon dioxide inside the distillation tank 130 decreases, and the mass of carbon dioxide inside the storage tank 110 increases, which has an issue of a rapid rise in the internal pressure of the storage tank 110. Since this issue may occur when the laundry processing device operates in the second operation mode alone, the first operation mode and the second operation mode are to operate selectively as in FIG. 3 and FIG. 4.

FIG. 3 is a flowchart for explaining a process in which a laundry processing device operates selectively according to a first operation mode and a second operation mode according to the first example embodiment of the present disclosure.

Referring to FIG. 3, the laundry processing device is in a state on standby for operation in operation S301, and the controller of the laundry processing device may monitor whether the pressure of the distillation tank is greater than a preset first pressure in operation S303. In this case, the preset first pressure is the maximum pressure set for the distillation tank for safety, and when the pressure of the distillation tank is greater than the first pressure is a risky situation, which may require reducing the pressure of the distillation tank.

When the pressure of the distillation tank is greater than the first pressure in operation S303, in order to reduce pressure, the controller of the laundry processing device may open a valve between the storage tank and the distillation tank in operation S305. By opening the valve in operation S305, a pressure difference between the storage tank and the distillation tank may be reduced. When a difference between the pressure of the storage tank and the pressure of the distillation tank is greater than a reference value in operation S307, a process may be repeated until less than the reference value.

When a difference between the pressure of the storage tank and the pressure of the distillation tank is less than the reference value, the controller of the laundry processing device may control operating in the first operation mode in operation S309. In addition, the controller of the laundry processing device may control the cooler and the compressor in an on state in operation S311 and operation S313 according to the first operation mode. Detailed descriptions regarding the first operation mode are described in FIG. 4 below.

In operation S315, the controller of the laundry processing device may monitor whether the pressure of the storage tank is less than a preset second pressure. In other words, the valve between the storage tank and the distillation tank is open, and the pressure of the distillation tank and the pressure of the storage tank may decrease simultaneously by operating according to the first operation mode, and whether the pressure of the storage tank among them is less than the preset second pressure may be monitored.

In this case, unlike the first operation mode in which both pressures of the storage tank and the distillation tank decrease, the pressure of the distillation tank may decrease and the pressure of the storage tank may increase according to the second operation mode. When operating according to the second operation mode, a degree of an increase in the pressure of the storage tank may be predetermined, and the second pressure may be set not to exceed a preset third pressure even though the pressure of the storage tank increases.

The controller of the laundry processing device may stop operating according to the first operation mode when it is identified that the pressure of the storage tank is less than the second pressure in operation S315. Specifically, the laundry processing device may stop operating according to the first operation mode in which the pressure of the storage tank and the pressure of the distillation tank decrease simultaneously.

In this case, the controller of the laundry processing device may close a valve between the storage tank and the compressor in operation S317. As the valve between the storage tank and the compressor is closed, gaseous carbon dioxide may not flow from the storage tank to the compressor, and gaseous carbon dioxide may flow from the distillation tank alone to the compressor. As described above in FIG. 1, as gaseous carbon dioxide is sucked from the distillation tank and discharged by the compressor and cooled and discharged to the storage tank by the cooler, the pressure of the distillation tank may decrease and the pressure of the storage tank may increase. As such, the pressure of the storage tank increased and the pressure of the distillation tank decreased may be a result of the second operation mode.

In operation S319, the controller of the laundry processing device may monitor whether the pressure of the storage tank which is increased according to the second operation mode is greater than the preset third pressure. In this case, the third pressure is the maximum pressure set for the storage tank for safety, and when the pressure of the storage tank is greater than the third pressure, the process of operation S305 may be repeated again as in operation S321 in order to reduce the pressure of the storage tank. In other words, when the pressure of the storage tank which is increased according to the second operation mode is greater than the third pressure, the pressure of the storage tank is to be reduced for safety, and accordingly, the process of operation S305 may be repeated again.

In operation S323, the controller of the laundry processing device may monitor whether the pressure of the distillation tank is less than a preset fourth pressure. The fourth pressure is the minimum pressure set for the distillation tank, and when the pressure of the distillation tank becomes less than the fourth pressure in a process of decreasing according to the second operation mode, the controller of the laundry processing device may control the compressor off and the cooler off as in operation S325 and operation S327.

If the pressure of the distillation tank is greater than the fourth pressure in operation S323, the controller of the laundry processing device may perform repeatedly the process of operation S319. Accordingly, when the pressure of the distillation tank is less than the fourth pressure, the controller of the laundry processing device may turn off the second operation mode, and accordingly, the compressor and the cooler may be controlled to be off.

FIG. 4 is a diagram for explaining a first operation mode of a laundry processing device according to the first example embodiment of the present disclosure.

Referring to FIG. 4, the controller of the laundry processing device may reduce the internal pressures of the tanks simultaneously according to the first operation mode after reducing a difference between the pressure of a storage tank and the pressure of a distillation tank. Specifically, when the pressure of the distillation tank exceeds the first pressure, which is risky, the controller may open a valve between the storage tank and the distillation tank to reduce the pressure difference between the storage tank and the distillation tank.

Then, the controller may control the laundry processing device so that a compressor may suck simultaneously gaseous carbon dioxide of the distillation tank and gaseous carbon dioxide of the storage tank and discharge according to the first operation mode. Accordingly, the internal pressure of the distillation tank and the internal pressure of the storage tank may decrease simultaneously.

For example, as valve 1 is open according to the first operation mode, the gaseous carbon dioxide of the storage tank may flow to the compressor as in operation S401, and the gaseous carbon dioxide of the distillation tank may also flow to the compressor as in operation S402. The compressor may suck gaseous carbon dioxide from the storage tank and the distillation tank simultaneously and may discharge as in operation S403. Therefore, as gaseous carbon dioxide is sucked into the compressor, gaseous carbon dioxide inside the storage tank and gaseous carbon dioxide inside the distillation tank decrease, and the pressures of the storage tank and the distillation tank may decrease simultaneously.

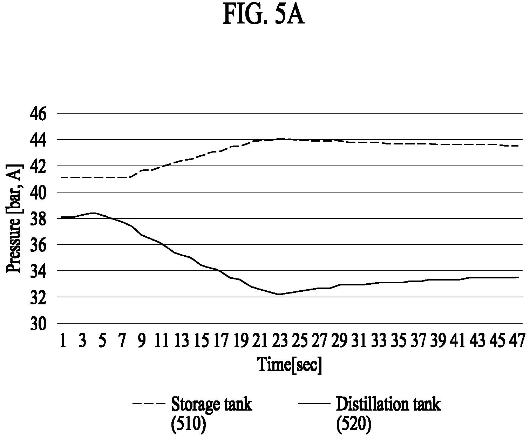

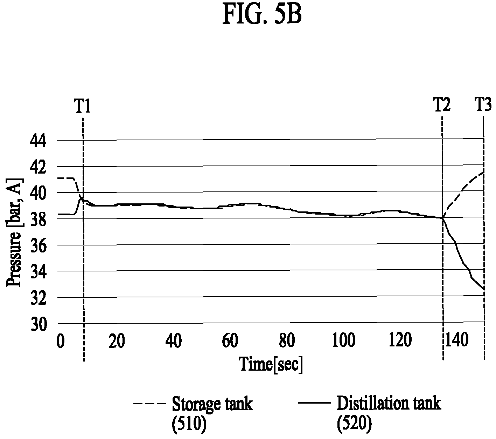

FIG. 5A shows changes in pressures inside a storage tank and a distillation tank in a laundry processing device according to the first example embodiment of the present disclosure, and FIG. 5B is a diagram showing changes in pressures inside a storage tank and a distillation tank according to an example embodiment other than FIG. 5A.

When examining a pressure change of a storage tank 510 indicated in FIG. 5A, as the maximum pressure (for example, 43 bar) allowed in the storage tank 510 is exceeded, the safety of the laundry processing device may be an issue.

Unlike this, when examining FIG. 5B, a valve between the storage tank 510 and a distillation tank 520 is open at time T1, and thus a pressure difference between the storage tank 510 and the distillation tank 520 may decrease. Then, the pressures of the storage tank 510 and the distillation tank 520 may be reduced simultaneously according to the first operation mode, and the first operation mode may be off at time T2 when the pressure of the storage tank becomes less than the second pressure. Then, operating may continue until time T3 according to the second operation mode in which the pressure of the storage tank 510 increases and the pressure of the distillation tank 520 decreases.

Therefore, the pressures of the storage tank 510 and the distillation tank 520 included in the laundry processing device may be managed within a non-risky range, through which a relatively low torque motor may be used for a compressor, thereby reducing costs.

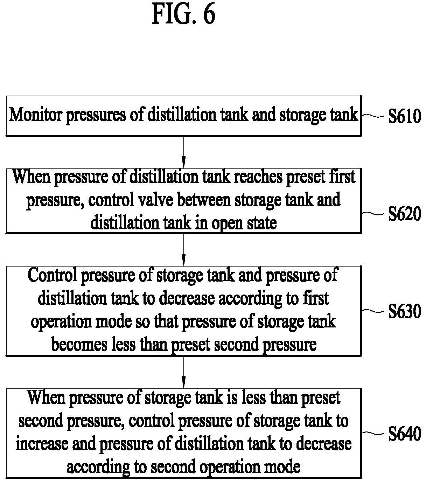

FIG. 6 is a diagram for explaining a control method of a laundry processing device according to the first example embodiment of the present disclosure.

Referring to FIG. 6, in operation S610, the laundry processing device may monitor pressures of a distillation tank and a storage tank. Specifically, the laundry processing device may monitor the pressure of each tank using a sensor installed in the distillation tank and the storage tank.

In operation S620, the laundry processing device, when the pressure of the distillation tank reaches a preset first pressure, may control a valve between the storage tank and the distillation tank in an open state. In this case, the laundry processing device, when a difference between the pressure of the distillation tank and the pressure of the storage tank is within a reference value, may control operation in a first operation mode.

In operation S630, the laundry processing device may control the pressure of the storage tank and the pressure of the distillation tank to decrease according to the first operation mode so that the pressure of the storage tank becomes less than a preset second pressure.

The first operation mode is a mode in which a compressor sucks gaseous carbon dioxide inside the distillation tank and gaseous carbon dioxide inside the storage tank simultaneously and discharges and may be a mode in which the pressures of the storage tank and the distillation tank decrease simultaneously.

In operation S640, the laundry processing device, when the pressure of the storage tank is less than the preset second pressure, may control the pressure of the storage tank to increase and the pressure of the distillation tank to decrease according to a second operation mode.

When the pressure of the storage tank is less than the second pressure, the laundry processing device may control a valve between the storage tank and the compressor in a closed state. Accordingly, the laundry processing device may control operation in the second operation mode in which the compressor sucks and discharges gaseous carbon dioxide of the distillation tank, which may be a mode in which the pressure of the storage tank increases and the pressure of the distillation tank decreases.

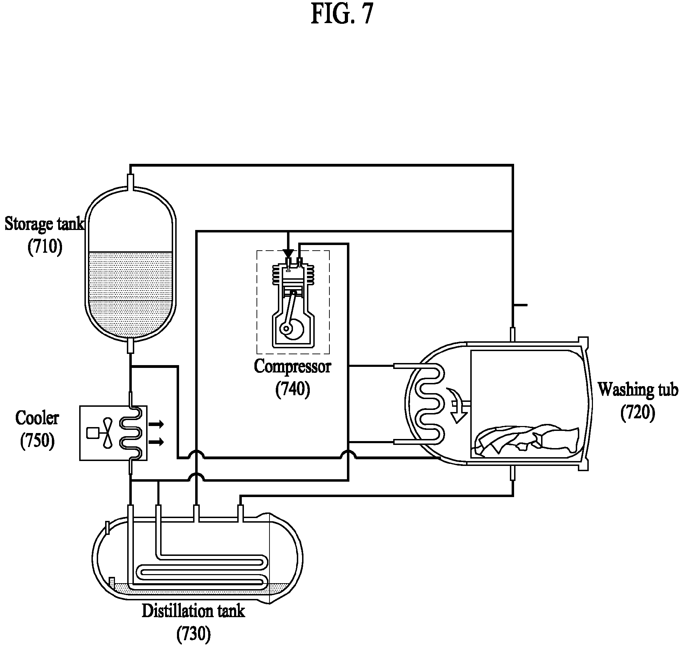

FIG. 7 is a diagram for showing a laundry processing device of a 3-tank structure including a single compressor according to a second example embodiment of the present disclosure. Specifically, the laundry processing device according to the second example embodiment of the present disclosure illustrated in FIG. 7 has a 3-tank structure including a single compressor and may perform a depressurization operation of a storage tank 710 during a laundry processing operation in order to resolve an issue according to high differential pressure for managing internal pressure safely.

Referring to FIG. 7, the laundry processing device according to the second example embodiment of the present disclosure may include the storage tank 710, a washing tub 720, a distillation tank 730, a compressor 740, and a cooler 750, and the storage tank 710, the washing tub 720, the distillation tank 730, and the cooler 750 of the laundry processing device including the single compressor 740 illustrated in FIG. 7 may correspond to the storage tank 110, the washing tub 120, the distillation tank 130, and the cooler 150 included in the laundry processing device according to the first example embodiment of the present disclosure of FIG. 1. In addition, in FIG. 7, some elements included in the laundry processing device including the single compressor 740 are omitted for convenience of description, and hereinafter, detailed descriptions are omitted regarding elements and operations of the laundry processing device including the single compressor 740 illustrated in FIG. 7 duplicated by elements and operations of the laundry processing device of FIG. 1.

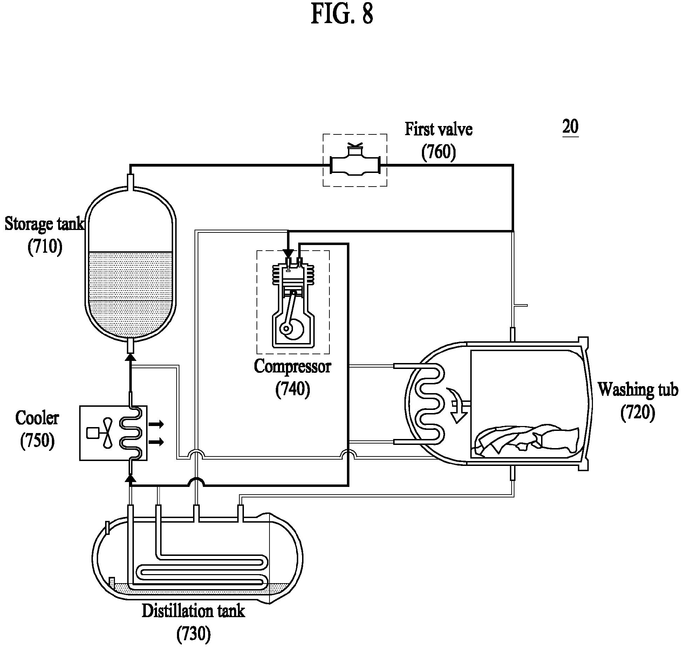

The laundry processing device including the single compressor 740 according to the second example embodiment of the present disclosure may perform the depressurization operation of the storage tank 710 during a laundry processing operation according to a third operation mode or a fourth operation mode. Specifically, the laundry processing device, when a washing operation or a rinsing operation in which a rotating operation of a drum is performed among laundry processing operations is performed, may perform a depressurization operation according to the third operation mode. Meanwhile, the laundry processing device, when recovery of the washing tub 720 is performed during a laundry processing operation, may perform a depressurization operation according to the fourth operation mode. A method of performing depressurization operations according to the third operation mode and the fourth operation mode according to the second example embodiment of the present disclosure is described in detail in FIGS. 8 to 11 described below.

The laundry processing device including the single compressor 740 may perform a depressurization operation inside the storage tank 710 in parallel with a laundry processing operation and accordingly may manage the internal pressure of the laundry processing device with the single compressor 740 alone. The laundry processing device including the single compressor 740 has a single-stage compression manner applied, which thus requires no separate intercooler.

The laundry processing device including the single compressor 740 according to the example embodiments of the present disclosure includes one compressor 740 for depressurization of the storage tank 710, thereby reducing the cost of implementing the laundry processing device and simplifying a system layout. Further, the laundry processing device including the single compressor 740 according to the example embodiments of the present disclosure performs an operation for depressurization of the storage tank 710 in parallel during a laundry processing operation and requires no separate time required for safety management of the storage tank 710, thereby preventing occurrence of delay to a laundry processing time. The operation for depressurization of the storage tank 710 according to the example embodiments of the present disclosure is described in detail through FIGS. 8 to 11 described below.

FIG. 8 is a diagram for showing operations in a third operation mode of a laundry processing device according to the second example embodiment of the present disclosure. As described above, the third operation mode of the laundry processing device according to the example embodiments of the present disclosure may be performed corresponding to a rotating operation of a drum included in the washing tub 720. Specifically, the third operation mode of the laundry processing device may be performed corresponding to a washing operation or a rinsing operation of the laundry processing device and may be performed in parallel with the washing operation or the rinsing operation.

Referring to FIG. 8, when the laundry processing device according to the second example embodiment of the present disclosure performs a washing operation or a rinsing operation, the laundry processing device may supply gaseous carbon dioxide inside the storage tank 710 to the compressor 740 for depressurization of the storage tank 710. The laundry processing device may supply gaseous carbon dioxide inside the storage tank 710 to the compressor 740 by controlling opening and closing of a first valve 760 positioned on a first pipe connecting the storage tank 710 and the compressor 740, and specifically, the opening and closing of the first valve 760 may be controlled by a control module included in the laundry processing device.

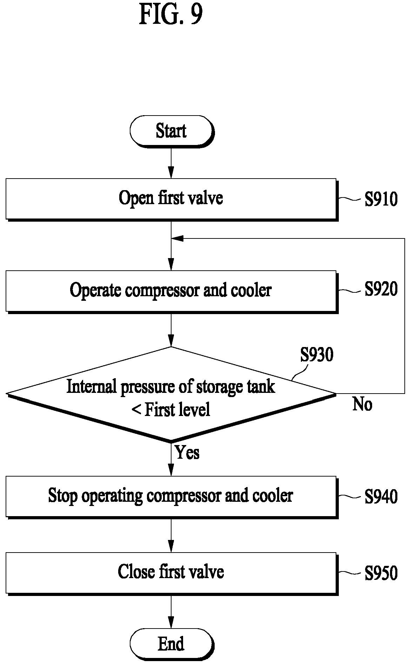

When the first valve 760 is opened, gaseous carbon dioxide inside the storage tank 710 may be supplied to the compressor 740, and the compressor 740 may suck and discharge gaseous carbon dioxide. The gaseous carbon dioxide discharged from the compressor 740 is supplied to the cooler 750, and the cooler 750 may cool the supplied gaseous carbon dioxide and discharge liquid carbon dioxide. The liquid carbon dioxide discharged by the cooler 750 may be recovered to the storage tank 710, and by recovering gaseous carbon dioxide inside the storage tank 710 as liquid carbon dioxide, the internal pressure of the storage tank 710 may be reduced. A control method of a laundry processing device performing a depressurization operation according to the third operation mode is described in detail through FIG. 9 described below.

FIG. 9 is a flowchart for explaining a control method of a laundry processing device according to a third operation mode according to the second example embodiment of the present disclosure.

In operation S910, the laundry processing device according to the example embodiments of the present disclosure may open a first valve according to the third operation mode corresponding to a washing operation or a rinsing operation of the laundry processing device. As the first valve is opened, gaseous carbon dioxide inside a storage tank may be supplied to a compressor. Specifically, the first valve may be controlled by a control module included in the laundry processing device.

In operation S920, the laundry processing device according to the example embodiments of the present disclosure may operate the compressor and a cooler in order to compress and cool gaseous carbon dioxide discharged from the storage tank. The liquid carbon dioxide liquefied through the compressor and the cooler may be supplied to the storage tank. Specifically, the compressor and the cooler may be controlled by the control module included in the laundry processing device.

In operation S930, the laundry processing device according to the example embodiments of the present disclosure may identify whether the internal pressure of the storage tank is less than a first level. Specifically, the internal pressure of the storage tank may be obtained by a pressure sensor included in the storage tank, and the first level may be preset in the manufacturing process of the laundry processing device. In example embodiments, the first level may be set as 23 bar. When it is identified that the internal pressure of the storage tank is less than the first level, a procedure may proceed to operation S940. Meanwhile, when it is identified that the internal pressure of the storage tank is greater than or equal to the first level, a procedure may return to operation S920.

In operation S940, the laundry processing device according to the example embodiments of the present disclosure may stop operating the compressor and the cooler that are driven to compress and cool gaseous carbon dioxide discharged from the storage tank.

In operation S950, the laundry processing device according to the example embodiments of the present disclosure may close the first valve in order to stop the operation for internal depressurization of the storage tank according to the third operation mode.

According to the example embodiments of the present disclosure, operation S910 through operation S950 described above may be conducted in a period of time when a washing operation or a rinsing operation of the laundry processing device is performed. For example, when a depressurization operation inside the storage tank according to the first operation mode is conducted while performing the washing operation, the depressurization operation inside the storage tank according to the first operation mode may be ended if it is identified that the pressure inside the storage tank is within a safety range even though the washing operation is not completed. Meanwhile, the pressure inside the storage tank reaches within the safety range according to the depressurization operation inside the storage tank according to the first operation mode, but when the pressure inside the storage tank reaches a range requiring depressurization by a washing operation or a rinsing operation later, the laundry processing device may perform repeatedly the depressurization operation inside the storage tank according to the first operation mode.

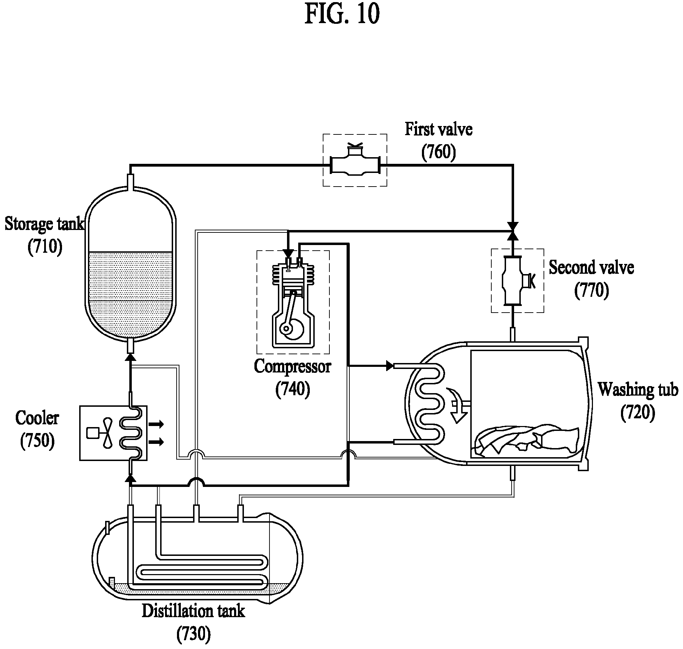

FIG. 10 is a diagram for showing operations in a fourth operation mode of a laundry processing device according to the second example embodiment of the present disclosure. As described above, the fourth operation mode of the laundry processing device according to the example embodiments of the present disclosure may be performed corresponding to a recovery operation of a washing tub.

Referring to FIG. 10, when the laundry processing device according to the second example embodiment of the present disclosure performs a recovery operation of the washing tub 720, the laundry processing device may perform an operation for depressurization of the storage tank 710 in parallel for a predetermined period of time from a time point when the recovery operation of the washing tub 720 starts. The laundry processing device may supply gaseous carbon dioxide inside the storage tank 710 to the compressor 740 for depressurizing the storage tank 710. The laundry processing device may control opening and closing of the first valve 760 positioned on the first pipe connecting the storage tank 710 and the compressor 740 to supply gaseous carbon dioxide inside the storage tank 710 to the compressor 740, and specifically, the opening and closing of the first valve 760 may be controlled by the control module included in the laundry processing device. In addition, the laundry processing device may supply gaseous carbon dioxide inside the washing tub 720 to the compressor 740 for recovery of the washing tub 720. The laundry processing device may control opening and closing of a second valve 770 positioned on a second pipe connecting the washing tub 720 and the compressor 740 to supply gaseous carbon dioxide inside the washing tub 720 to the compressor 740, and specifically, the opening and closing of the second valve 770 may be controlled by the control module included in the laundry processing device.

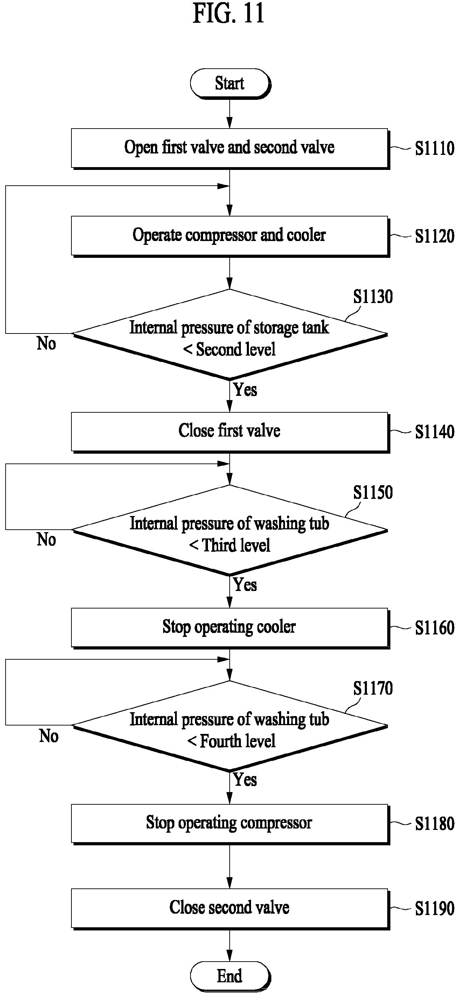

As the first valve 760 is opened, gaseous carbon dioxide inside the storage tank 710 may be supplied to the compressor 740, and the compressor 740 may suck gaseous carbon dioxide supplied from the storage tank 710 and discharge. The gaseous carbon dioxide discharged from the compressor 740 is supplied to the cooler 750, and the cooler 750 may cool the supplied gaseous carbon dioxide to discharge liquid carbon dioxide. The liquid carbon dioxide discharged by the cooler 750 may be recovered to the storage tank 710, and by recovering gaseous carbon dioxide inside the storage tank 710 as liquid carbon dioxide, the internal pressure of the storage tank 710 may be reduced. Meanwhile, as the second valve 770 is opened, gaseous carbon dioxide inside the washing tub 720 may be supplied to the compressor 740, and the compressor 740 may suck and discharge gaseous carbon dioxide supplied from the washing tub 720. The gaseous carbon dioxide discharged from the compressor 740 is supplied to the cooler 750, and the cooler 750 may cool the supplied gaseous carbon dioxide to discharge liquid carbon dioxide, and the liquid carbon dioxide discharged by the cooler 750 may be recovered to the storage tank 710. A control method of a laundry processing device performing a depressurization operation according to the fourth operation mode is described in detail through FIG. 11 described below.

FIG. 11 is a flowchart for explaining a control method of a laundry processing device according to a fourth operation mode according to the second example embodiment of the present disclosure.

In operation S1110, the laundry processing device according to the example embodiments of the present disclosure may open a first valve and a second valve according to the fourth operation mode corresponding to a recovery operation of a washing tub of the laundry processing device. As the first valve is opened, gaseous carbon dioxide inside a storage tank may be supplied to a compressor, and as the second valve is opened, gaseous carbon dioxide inside a washing tub may be supplied to the compressor. Specifically, the first valve and the second valve may be controlled by a control module included in the laundry processing device.

In operation S1120, the laundry processing device according to the example embodiments of the present disclosure may operate the compressor and a cooler in order to compress and cool gaseous carbon dioxide discharged from the storage tank and the washing tub. Liquid carbon dioxide liquefied through the compressor and the cooler may be supplied to the storage tank. Specifically, the compressor and the cooler may be controlled by the control module included in the laundry processing device.

In operation S1130, the laundry processing device according to the example embodiments of the present disclosure may identify whether the internal pressure of the storage tank is less than a second level. Specifically, the internal pressure of the storage tank may be obtained by a pressure sensor included in the storage tank, and the second level may be preset in the manufacturing process of the laundry processing device. In example embodiments, the second level may be set as 30 bar. When it is identified that the internal pressure of the storage tank is less than the second level, a procedure may proceed to operation S1140. Meanwhile, when it is identified that the internal pressure of the storage tank is greater than or equal to the second level, a procedure may return to operation S 1120.

In operation S1140, the laundry processing device according to the example embodiments of the present disclosure may close the first valve in order to stop supplying gaseous carbon dioxide inside the storage tank to the compressor. As the first valve is closed, a depressurization operation for gaseous carbon dioxide discharged from the storage tank may be stopped, and a recovery operation of the washing tub for gaseous carbon dioxide discharged from the washing tub may be maintained.

In operation S1150, the laundry processing device according to the example embodiments of the present disclosure may identify whether the internal pressure of the washing tub is less than a third level. Specifically, the internal pressure of the washing tub may be obtained by a pressure sensor included in the washing tub, and the third level may be preset in the manufacturing process of the laundry processing device. In example embodiments, the third level may be set as 5 bar. When it is identified that the internal pressure of the washing tub is less than the third level, a procedure may proceed to operation S1160. Meanwhile, when it is identified that the internal pressure of the washing tub is greater than or equal to the third level, a procedure may repeat operation S1150.

In operation S1160, the laundry processing device according to the example embodiments of the present disclosure may stop operating the cooler driven in order to cool gaseous carbon dioxide discharged from the washing tub. In example embodiments, although operating the cooler is stopped, operating the compressor may be maintained.

In operation S1170, the laundry processing device according to the example embodiments of the present disclosure may identify whether the internal pressure of the washing tub, which is obtained from the pressure sensor included in the washing tub, is less than a fourth level. The fourth level may be preset in the manufacturing process of the laundry processing device, and in example embodiments, the fourth level may be set as 2.5 bar. When it is identified that the internal pressure of the washing tub is less than the fourth level, a procedure may proceed to operation S1180. Meanwhile, when it is identified that the internal pressure of the washing tub is greater than or equal to the fourth level, a procedure may repeat operation S 1170.

In operation S1180, the laundry processing device according to the example embodiments of the present disclosure may stop operating the compressor to suck and discharge gas inside the washing tub for recovery of the washing tub.

In operation S1190, the laundry processing device according to the example embodiments of the present disclosure may close the second valve in order to stop the recovery operation of the washing tub for recovering gaseous carbon dioxide inside the washing tub.

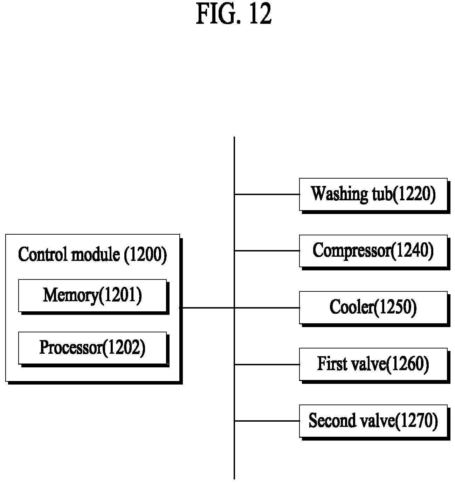

FIG. 12 is a block diagram for explaining operations of a laundry processing device performing internal depressurization according to the second example embodiment of the present disclosure.

The elements of a laundry processing device illustrated in FIG. 12 may correspond to elements of the laundry processing device according to the first example embodiment and the second example embodiment of the present disclosure, and for convenience of description, illustration of some elements is omitted. Referring to FIG. 12, the laundry processing device according to the example embodiments of the present disclosure may include at least one control module 1200, a washing tub 1220, a compressor 1240, a cooler 1250, a first valve 1260, and a second valve 1270.

In the example embodiments of the present disclosure, the control module 1200 may control the washing tub 1220, the compressor 1240, the cooler 1250, the first valve 1260, and the second valve 1270. The control module 1200 may control elements included in the laundry processing device according to an input of a user obtained through a control panel (not shown) included in the laundry processing device and may include a memory 1201 and at least one processor 1202.

In example embodiments, the control module 1200 may include other devices connectable to the control module 1200 through one or more ports (universal serial bus (USB), a headphone jack, a Lightning connector, a Thunderbolt connector, and the like). The devices connectable to the control module 1200 may include a plurality of ports formed to accept a fiber optic connector.

The memory 1201 included in the control module 1200 may store data processed by the control module 1200 and data to be processed thereby. Further, the memory 1201 may store at least some of fundamental programming, data structure, application (program, code module, instructions), and driver which may provide a function of at least one example embodiment of the present disclosure. The memory may include at least some of random access memory (RAM), such as dynamic random access memory (DRAM) and static random access memory (SRAM), read-only memory (ROM), electrically erasable programmable read-only memory (EEPROM), CD-ROM, optical disk storage, hard disk drive (HDD), solid state drive (SSD), and flash memory.

The processor 1202 included in the control module 1200 may provide a function of example embodiments according to the present disclosure. For example, the processor 1202, by executing programs stored in the memory 1201 included in the control module 1200, may control elements included in the laundry processing device in general. In example embodiments, the processor may be implemented by at least some of central processing unit (CPU), graphics processing unit (GPU), and application processor (AP), but a type of the processor according to the present disclosure is not limited thereto.

The processor 1202 may control operation of a motor (not shown) included in the laundry processing device to control a rotating operation of the washing tub 1220 according to a laundry processing operation.

The processor 1202 may control operation of the compressor 1240 and the cooler 1250 included in the laundry processing device. In the example embodiments of the present disclosure, the processor 1202 may operate the compressor 1240 and the cooler 1250 in order to perform internal depressurization of a storage tank according to an operation mode of the laundry processing device, and when the internal pressure of the storage tank reaches a safety range, may stop operating the compressor 1240 and the cooler 1250.

In addition, the processor 1202 may control opening and closing of the first valve 1260 and the second valve 1270 in order to supply gaseous carbon dioxide as the internal pressure of the laundry processing device maintains a safety range. The processor 1202 may control the opening and closing of the first valve 1260 and the second valve 1270 according to an operation mode of the laundry processing device.

The descriptions above are specific example embodiments for implementing the present disclosure. The present disclosure may include not only the example embodiments described above but also example embodiments with a simple design change or that may be easily changed. In addition, the present disclosure may include technologies that may be implemented by easily modifying using the aforementioned example embodiments. Therefore, the scope of the present disclosure is not to be determined as limited to the aforementioned example embodiments but to be determined by the appended claims and the equivalents to the claims of the present disclosure.

## Claims

1. A laundry processing device comprising:
a washing tub that includes a drum;
a distillation tank that stores liquid carbon dioxide discharged from the washing tub and gaseous carbon dioxide;
a storage tank that stores liquid carbon dioxide to which gaseous carbon dioxide of the distillation tank is cooled and gaseous carbon dioxide evaporated from the cooled liquid carbon dioxide;
a compressor that sucks and discharges at least one of the gaseous carbon dioxide of the distillation tank and the gaseous carbon dioxide of the storage tank;
a cooler that cools gaseous carbon dioxide discharged from the compressor; and
a controller that monitors pressures inside the distillation tank and the storage tank.

2. The laundry processing device of claim 1,
wherein the controller is configured,
when the pressure of the distillation tank reaches a preset first pressure, to control a first valve between the distillation tank and the storage tank in an open state.

3. The laundry processing device of claim 1,
wherein the controller is configured,
when a difference between the pressure of the distillation tank and the pressure of the storage tank is within a reference value, to control operation of the laundry processing device in a first operation mode.

4. The laundry processing device of claim 3,
wherein the first operation mode is,
until the pressure of the storage tank reaches a preset second pressure, a mode to control operation of the laundry processing device in order for liquid carbon dioxide cooled in the cooler to be discharged into the storage tank after the compressor sucks the gaseous carbon dioxide of the distillation tank and the gaseous carbon dioxide of the storage tank simultaneously and discharges.

5. The laundry processing device of claim 4,
wherein the controller is configured,
when the pressure of the storage tank reaches the preset second pressure, to control a second valve between the storage tank and the compressor in a closed state.

6. The laundry processing device of claim 4,
wherein, when a mode of the laundry processing device corresponds to the first operation mode, the compressor
sucks and discharges gaseous carbon dioxide of the storage tank and the distillation tank.

7. The laundry processing device of claim 3,
wherein the controller is configured,
after the first operation mode, to control operation of the laundry processing device in a second operation mode in which the compressor sucks and discharges the gaseous carbon dioxide of the distillation tank, and
wherein the second operation mode is,
when the pressure of the storage tank reaches a preset third pressure, a mode to control operation of the laundry processing device in the first operation mode, and after the pressure of the distillation tank reaches a preset fourth pressure in a state where the pressure of the storage tank is not reached by the preset third pressure, a mode in which operation of the compressor is ended.

8. The laundry processing device of claim 7,
wherein, when a mode of the laundry processing device corresponds to the second operation mode, the compressor
sucks gaseous carbon dioxide from the distillation tank alone and discharges.

9. The laundry processing device of claim 1,
wherein the controller is configured,
according to a third operation mode, to control the compressor to suck and discharge gaseous carbon dioxide inside the storage tank during a rotating operation of the drum corresponding to a washing mode or a rinsing mode.

10. The laundry processing device of claim 9,
wherein the controller is configured to:
according to the third operation mode, control a second valve between the storage tank and the compressor in an open state in order to supply gaseous carbon dioxide inside the storage tank to the compressor;
control the compressor and the cooler so that the compressor and the cooler operate; and
when the pressure inside the storage tank reaches a preset fifth pressure, control the second valve in a closed state.

11. The laundry processing device of claim 9,
wherein the controller is configured,
according to a fourth operation mode, to control the compressor to suck gaseous carbon dioxide inside the storage tank and gaseous carbon dioxide inside the washing tub simultaneously and discharge, after the rotating operation of the drum is completed.

12. The laundry processing device of claim 11,
wherein the controller is configured to:
according to the second operation mode, control a second valve between the storage tank and the compressor in an open state in order to supply gaseous carbon dioxide inside the storage tank to the compressor;
control a third valve between the washing tub and the compressor in an open state in order to supply gaseous carbon dioxide inside the washing tub to the compressor;
control the compressor and the cooler so that the compressor and the cooler operate; and
when the pressure inside the storage tank reaches a preset sixth pressure, control the second valve in a closed state.

13. The laundry processing device of claim 12,
wherein the controller is configured,
when pressure inside the washing tub reaches a preset seventh pressure, to control the cooler so that operation of the cooler is stopped.

14. The laundry processing device of claim 13,
wherein the controller is configured,
when the pressure inside the washing tub reaches a preset eighth pressure, to control the third valve in a closed state.

15. A control method of a laundry processing device, the control method comprising:
monitoring pressures of a distillation tank and a storage tank;
when the pressure of the distillation tank reaches a preset first pressure, controlling a valve between the storage tank and the distillation tank in an open state;
controlling the pressure of the storage tank and the pressure of the distillation tank to decrease according to a first operation mode so that the pressure of the storage tank becomes less than a preset second pressure; and
when the pressure of the storage tank is less than the preset second pressure, controlling the pressure of the storage tank to increase and the pressure of the distillation tank to decrease according to a second operation mode.
